# EUROPÄISCHE PATENTSCHRIFT

(11) **EP 0 927 983 B1**
(45) Veröffentlichungstag und Bekanntmachung des Hinweises auf die Patenterteilung: **25.08.2004**
(21) Anmeldenummer: 98122449.6
(22) Anmeldetag: 26.11.1998
(51) Int. Cl.: G08G 1/16

(54) **Einrichtung zur Warnung des Fahrers eines Kraftfahrzeugs**
Vehicle driver warning device
Dispositif d'avertissement d'un conducteur de véhicule

(30) Priorität: 30.12.1997 DE 19758155
(43) Veröffentlichungstag der Anmeldung: 07.07.1999
(73) Patentinhaber: ROBERT BOSCH GMBH, 70442 Stuttgart (DE)
(72) Erfinder: Hickel, Frank, 31558 Hagenburg (DE); Brenzel, Christian, 31139 Hildesheim (DE); Grabow, Wilhelm, 31139 Hildesheim (DE); Passmann, Christian, 31171 Nordstemmen (DE)

(56) Entgegenhaltungen:
- EP-A- 0 543 543
- EP-A- 0 715 287
- EP-A- 0 731 400
- WO-A-92/09060
- US-A- 4 706 086
- US-A- 5 428 544
- US-A- 5 546 311

## Beschreibung

Die Erfindung betrifft eine Einrichtung zur Warnung des Fahrers eines Kraftfahrzeugs, wobei eine Datenübertragungseinrichtung mit Datenübertragungseinrichtungen anderer Kraftfahrzeuge Daten austauscht, die für eine Kollisionsgefahr relevant sind, und eine Datenverarbeitungseinrichtung, die jeweils empfangene Daten auswertet und bei Feststellen einer Kollisionsgefahr Warnsignale ausgibt.

Im Straßenverkehr können unzureichende Sichtverhältnisse, beispielsweise durch Dunkelheit, nicht oder schlecht einsehbaren Straßenverlauf, Nebel oder starke Niederschläge, den Fahrer in seiner Wahrnehmungsfähigkeit beeinträchtigen. Der Fahrer kann dadurch an Unfällen beteiligt sein.

Aus der US 5,546,311 ist ein System für die Kommunikation zwischen Fahrzeugen bekannt. Hierbei werden Fahrzeuggeschwindigkeit und Fahrtrichtung von anderen Fahrzeugen an ein Fahrzeug übertragen. Der Fahrer des Fahrzeugs selbst wird vor denjenigen anderen Fahrzeugen gewarnt, die sich mit überhöhter Geschwindigkeit bewegen bzw. die sich hinter einer Kurve befinden.

Aus der US 5,428,544 ist ein Übertragungssystem für die Fahrzeug-Fahrzeug-Kommunikation bekannt, bei dem die Geschwindigkeit, die Fahrtroute und die Richtung anderer Fahrzeuge an ein Fahrzeug übertragen werden. Hierbei wird zwischen den Informationen gemittelt, die von verschiedenen Fahrzeugen auf einer Straße übermittelt werden, um eine Information über die allgemeine Verkehrssituation auf dieser Straße zu erhalten.

Aus der US 4,706,086 ist ebenfalls ein System für die Übertragung von Verkehrszuständen zwischen einzelnen Fahrzeugen bekannt.

Aufgabe der vorliegenden Erfindung ist es daher, eine Einrichtung zur Warnung des Fahrers vor Kollisionsgefahren, insbesondere vor Auffahrunfällen, anzugeben. Dabei soll der Fahrer möglichst nur auf diejenigen Verkehrszustände oder Verkehrsgefährdungen aufmerksam gemacht werden, die ihn unmittelbar betreffen.

Diese Aufgabe wird erfindungsgemäß dadurch gelöst, dass die Daten mindestens Informationen über die Geschwindigkeit und die Fahrtrichtung des jeweiligen Kraftfahrzeugs enthalten.

Die Erfindung ermöglicht unter Verwendung der Daten des eigenen Kraftfahrzeugs aus den empfangenen Daten diejenigen herauszufiltern, welche für eine Kollisionsgefahr relevant sind.

Die erfindungsgemäße Einrichtung verhindert, dass Daten von auf einer gegenüberliegenden Richtungsfahrbahn befindlichen Kraftfahrzeugen zu Warnungen des Fahrers führen. Dies wird dadurch erreicht, dass die empfangene Fahrtrichtung mit der Fahrtrichtung des eigenen Kraftfahrzeugs verglichen wird und dass bei entgegengesetzten Fahrtrichtungen einschließlich eines Toleranzbandes das Kraftfahrzeug, welches die empfangene Fahrtrichtung ausgesendet hat, dem Gegenverkehr zugeordnet und keine Warnung ausgegeben wird.

Im einzelnen kann bei der erfindungsgemäßen Einrichtung vorgesehen sein, dass die Daten Augenblickswerte der Fahrzeuggeschwindigkeit und der Fahrtrichtung zum jeweiligen Zeitpunkt, vorzugsweise auch vorangegangene Augenblickswerte enthalten.

Um Verfälschungen der Ergebnisse durch kurzfristige Änderungen oder Übertragungsfehler zu vermeiden, kann ferner Mittelwerte der Fahrzeuggeschwindigkeit und/oder der Fahrtrichtung enthalten. Dabei können die Mittelwerte über vorgegebene Zeitintervalle oder über vorgegebene Streckenintervalle gebildet werden.

Je nach Erfordernissen im einzelnen können die Daten nach vorgegebenen Zeitintervallen oder nach vorgegebenen Streckenintervallen gesendet werden.

Häufig verlaufen mehrere Straßen über mehr oder weniger kurze Strecken parallel. Für den Betrieb der erfindungsgemäßen Einrichtung ist daher eine Erkenntnis darüber vorteilhaft, auf welcher Straßenart sich das jeweilige Kraftfahrzeug befindet oder in welchem Bereich, beispielsweise innerhalb oder außerhalb einer Stadt. Um hierzu Informationen abzuleiten, ist bei einer anderen Ausgestaltung der Erfindung vorgesehen, daß in der Datenverarbeitungseinrichtung eine Datenbasis vorhanden ist, welche für Straßen- oder Bereichsarten typische Profile von Eingangsgrößen beschreibt, welcher als Eingangsgrößen mindestens die Fahrtrichtung und die Geschwindigkeit zuführbar sind und welcher als Ausgangsgröße eine Straßen- oder Bereichsart entnehmbar ist.

Die somit abgeleitete Information über die Straßenart kann beispielsweise dadurch ausgewertet werden, daß die Ausgangsgröße Straßenart an andere Kraftfahrzeuge gesendet und in dem jeweils empfangenden Kraftfahrzeug mit der dort ermittelten Straßenart verglichen wird. Damit kann im jeweils empfangenden Kraftfahrzeug festgestellt werden, ob sich das sendende Kraftfahrzeug, beispielsweise auf einer neben einer Autobahn geführten Landstraße bewegt. Ein plötzlicher Stillstand eines solchen Kraftfahrzeugs führt dann nicht zu einer Warnung des Fahrers des jeweils empfangenden Kraftfahrzeugs.

Informationen über die Bereichsart können beispielsweise dazu verwendet werden, daß das Aussenden bzw. das Empfangen von Daten für die erfindungsgemäße Einrichtung innerhalb einer Stadt unterbleibt, da dort zuviele empfangene Daten ausgewertet werden müßten und der Fahrer ohnehin auf haltende Kraftfahrzeuge eingestellt ist.

Die bei dieser Ausgestaltung gespeicherten typischen Profile überschneiden sich naturgemäß. So ist beispielsweise die Fahrt eines Kraftfahrzeugs auf einer schnurgeraden Bundesstraße mit einer Geschwindigkeit von 110 km/h nicht von einer solchen Fahrt auf einer Autobahn zu unterscheiden. Die Ausgangsgröße Straßenart ist daher meistens mit einer gewissen Wahrscheinlichkeit behaftet. Um diese Wahrscheinlichkeit zu vergrößern kann bei dieser Ausgestaltung der Erfindung vorgesehen sein, daß ferner die Eingangsgrößen an andere Kraftfahrzeuge übertragen und dort zusätzlich der Datenbasis zugeführt werden. Die Wahrscheinlichkeit, daß die ermittelte Straßenart tatsächlich vorliegt, ist dann umso größer, wenn die Eingangsgrößen vieler Fahrzeuge auf diese Straßenart hinweisen.

Für die Ableitung eines Warnsignals ist es von erheblicher Bedeutung, ob das sendende Kraftfahrzeug sich vor oder hinter dem empfangenden Kraftfahrzeug befindet. Um eine solche Entscheidung zu ermöglichen, ist bei einer weiteren Ausgestaltung der erfindungsgemäßen Einrichtung vorgesehen, daß Fahrtrichtungsinformationen einer jeweils zurückgelegten Fahrtstrecke in einer Tabelle abgelegt werden, daß die Tabelle von Zeit zu Zeit an andere Kraftfahrzeuge übertragen wird und daß die empfangene Tabelle und die in der eigenen Datenverarbeitungseinrichtung vorliegende Tabelle derart kombiniert werden, daß in der Tabelle als gleich beschriebene Streckenabschnitte übereinandergelegt werden und daß dasjenige Kraftfahrzeug, aus dem die Tabelle empfangen wurde, als vorausfahrend betrachtet wird, wenn die empfangene Tabelle in Richtung neueren Fahrtrichtungsinformationen über die Tabelle in der eigenen Datenverarbeitungseinrichtung hinausragt.

Im übrigen kann die Häufigkeit der auszusendenden Meldungen in Abhängigkeit von der Gesamtzahl der Kraftfahrzeuge, die an dem Datenaustausch im Rahmen der erfindungsgemäßen Einrichtung teilnehmen, vom Fachmann festgelegt werden und gegebenenfalls auch nach dem auftretenden Bedarf gesteuert werden. Um eine möglicherweise unnötige Überlastung des zur Verfügung stehenden Frequenzbereichs zu vermeiden, kann bei der erfindungsgemäßen Einrichtung auch vorgesehen sein, daß die Informationen nicht laufend, sondern nur zusammen mit einer Warnmeldung gesendet werden. Dies setzt jedoch voraus, daß bei dem jeweils sendenden Kraftfahrzeug ein Zustand festgestellt wird, der eine Warnmeldung erforderlich macht, beispielsweise ein stehendes Kraftfahrzeug am Stauende. Die Datenverarbeitungseinrichtung kann dies beispielsweise durch den Stillstand (Fahrzeuggeschwindigkeit = 0) auf der Autobahn, durch aktivierte Warnblinker oder durch Werte für die Bremsverzögerung erkennen.

Im Rahmen der Erfidnung kann jedoch auch vorgesehen sein, daß die Warnbedürftigkeit einer Information im jeweils empfangenden Kraftfahrzeug festgestellt wird, wozu dann vorgesehen sein kann, daß die Informationen wiederholt gesendet werden. So kann beispielsweise im empfangenden Kraftfahrzeug ein Warnsignal erzeugt werden, wenn es mit einer Geschwindigkeit von beispielsweise 200 km/h auf ein vor ihm mit 100 km/h fahrendes Kraftfahrzeug zufährt, während eine Information über die Fahrzeuggeschwindigkeit von 100 km/h bei einem nachfolgenden Kraftfahrzeug, das 110 km/h schnell ist, kein Warnsignal hervorruft.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild einer erfindungsgemäßen Einrichtung,
- Fig. 2: den Verlauf eines Straßenabschnittes mit einigen Kraftfahrzeugen zur Erläuterung der Aufgabe der erfindungsgemäßen Einrichtung,
- Fig. 3: einen Straßenabschnitt mit einigen zugeordneten Daten,
- Fig. 4: ein Beispiel einer Datenstruktur, wie sie an andere Kraftfahrzeuge gesendet wird,
- Fig. 5: eine schematische Darstellung zur Erkennung des Straßen- oder Bereichstyps,
- Fig. 6: eine schematische Darstellung zur Erkennung, auf welcher Richtungsfahrbahn sich ein Kraftfahrzeug befindet,
- Fig. 7: einen Streckenabschnitt mit zwei Kraftfahrzeugen,
- Fig. 8: schematische Darstellungen der jeweils in den Kraftfahrzeugen ermittelten Streckenabschnitte und
- Fig. 9: eine Überlagerung beider Streckenabschnitte zur Ermittlung, ob sich ein anderes Kraftfahrzeug vor oder hinter dem jeweils betrachteten Kraftfahrzeug befindet.

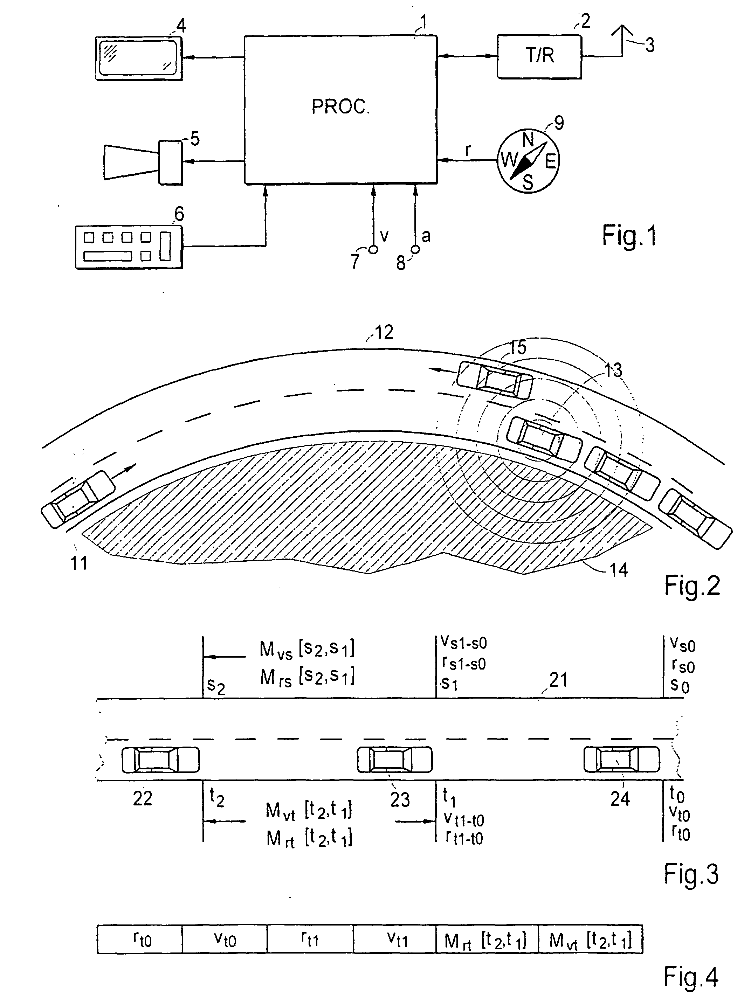

Das in Fig. 1 als Blockschaltbild dargestellte Ausführungsbeispiel weist eine Datenverarbeitungseinrichtung 1 und eine Sende/Empfangseinrichtung 2 mit einer Antenne 3 auf. An die Datenverarbeitungseinrichtung - im folgenden auch Prozessor genannt - sind ferner ein Display 4, ein akustischer Signalgeber 5 und eine Tastatur 6 angeschlossen.

Ferner verfügt der Prozessor 1 über eine Reihe von Eingängen, an denen Sensoren 7, 8, 9 angeschlossen sind - im Falle des Ausführungsbeispiels ein Radsensor zur Messung der Geschwindigkeit v, ein Sensor zur Messung der Beschleunigung a und ein Richtungssensor 9 (Kompaß). Zur Ausbildung der erfindungsgemäßen Einrichtung im einzelnen stehen dem Fachmann weitere Sensoren zur Verfügung, wie beispielsweise Lenkwinkelsensoren. Außerdem können die dargestellten Sensoren in verschiedener Weise ausgeführt sein. So kann beispielsweise als Kompaß ein GPS-Empfänger dienen. Ferner ist die Verwendung bereits für andere Einrichtungen im Kraftfahrzeug vorgesehener Sensoren möglich. So kann beispielsweise ein Richtungssensor auch für ein Navigationssystem verwendet werden.

Jedes der beteiligten Kraftfahrzeuge ist mit einer Einrichtung nach Fig. 1 ausgerüstet, wobei der Sende- bzw. Empfangsbereich durch die Wahl der Sendeleistung und des Frequenzbereichs relativ klein ist - beispielsweise bis etwa 1000 m beträgt.

Fährt beispielsweise ein Kraftfahrzeug 11 (Fig. 2) auf einer Straße 12 in der durch einen Pfeil angegebenen Richtung, kann dessen Fahrer wegen eines Steilhanges 14 nicht frühzeitig ein am Ende eines Staus stehendes Kraftfahrzeug 13 erkennen, wenn er schneller als zulässig fährt oder unaufmerksam ist. Durch Aussenden von Signalen durch das Kraftfahrzeug 13, die besagen, daß dieses Kraftfahrzeug steht (oder sehr langsam fährt), kann der Fahrer des Fahrzeugs 11 frühzeitig über ein akustisches Signal gewarnt werden. Eine Warnung soll jedoch nicht erzeugt werden, wenn ein auf der Gegenfahrbahn befindliches Kraftfahrzeug 15 Signale aussendet. Um dem jeweils betroffenen Kraftfahrzeug 11 eine Selektion aus der Menge der sendenden Kraftfahrzeuge 13, 15 zu ermöglichen, enthalten die von den Kraftfahrzeugen 13, 15 gesendeten Daten Informationen, die beispielhaft in Fig. 3 dargestellt sind. Dazu zeigt Fig. 3 eine Straße 21 mit einem Kraftfahrzeug an drei Positionen 22, 23, 24. Dabei kann die Erfassung der Daten an diskreten Wegpunkten s0, s1, s2 erfolgen, deren Abstände gegebenenfalls auch veränderbar sind.

So werden zum Beispiel Augenblickswerte vₛ₀, rₛ₀ zum jeweils betrachteten Streckenpunkt s0 und Augenblickswerte vₛ₁₋ₛ₀ und rₛ₁₋ₛ₀ zu einem vorangegangenen Streckenpunkt s1 erfaßt. Durch Erfassung von Augenblickswerten an weiter zurückliegenden Streckenpunkten sind ferner Mittelwerte Mᵥₛ für das Intervall s2 bis s1 und Mᵣₛ gebildet.

Eine Alternative für die Eingangsgrößen ist in Fig. 3 ebenfalls dargestellt, nämlich die Erfassung der Eingangsgrößen zu vorgegebenen Zeitpunkten bzw. für vorgegebene Zeitintervalle.

Fig. 4 zeigt ein Beispiel einer Struktur der zu sendenden Daten, welche die Fahrtrichtung und die Fahrzeuggeschwindigkeit zum betrachteten Zeitpunkt t₀ und zu einem vorangegangenen Zeitpunkt t₁ sowie die Mittelwerte der Fahrtrichtung und der Fahrzeuggeschwindigkeit im Zeitintervall von t₂ bis t₁ umfassen.

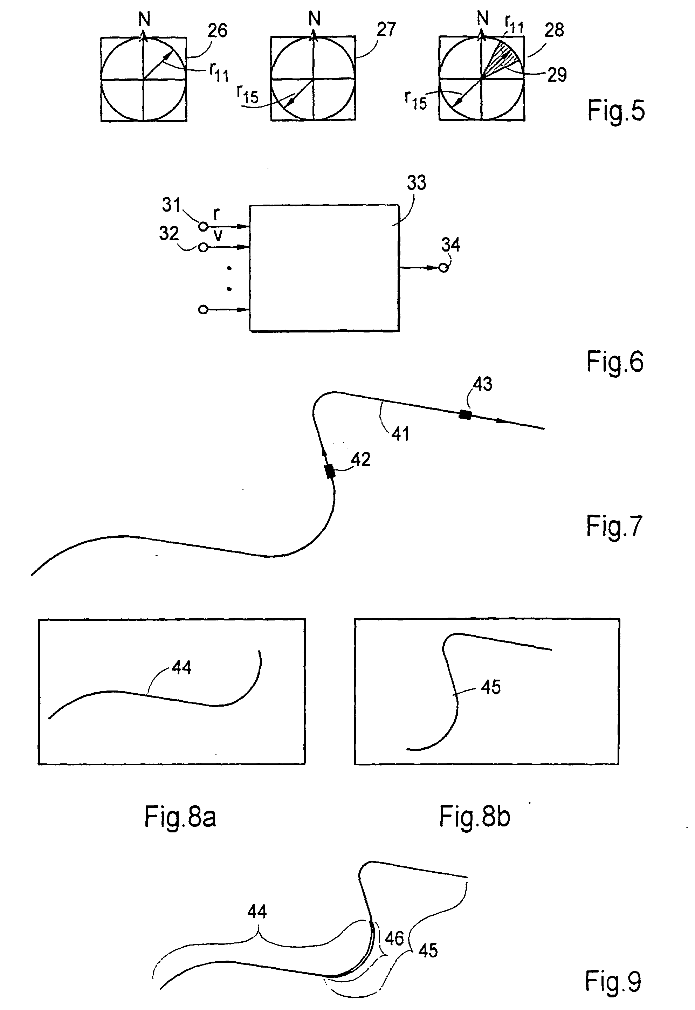

Fig. 5 zeigt anhand dreier Diagramme 26, 27, 28 die Erkennung der Richtungsfahrspur. Diagramm 26 zeigt als Pfeil r₁₁ den Kurs des eigenen Kraftfahrzeugs, zum Beispiel denjenigen des Kraftfahrzeugs 11 (Fig. 2), während Diagramm 27 den Kurs r₁₅ des Kraftfahrzeugs 15 (Fig. 2) darstellt. Das Diagramm 28 veranschaulicht die Überlagerung beider Richtungen. Liegt der Pfeil r₁₁ in einem Toleranzband 29, wird angenommen, daß sich das Kraftfahrzeug 15 auf der Gegenfahrspur befindet.

Zur schärferen Ergebnisbildung können dabei mehrere Fahrtrichtungsinformationen verwendet werden.

Fig. 6 zeigt schematisch die Erkennung der Straßenart, auf welcher sich das jeweilige Kraftfahrzeug bewegt. Dazu werden verschiedene Eingangsgrößen zugeführt, nämlich bei 31 die Fahrtrichtung r, bei 32 die Fahrzeuggeschwindigkeit v und an weiteren nicht näher bezeichneten Eingängen gegebenenfalls weitere Eingangsgrößen. In einer Datenbasis 33 sind typische Profile der Eingangsgrößen in Abhängigkeit der Straßenart abgelegt. Ein Auswertealgorithmus korreliert die eigenen Fahrzeugdaten mit der Datenbasis. Je nach Variante werden die empfangenen Daten mit in die Korrelation einbezogen. Typische Profile sind beispielsweise für die Straßenart Autobahn hohe Geschwindigkeit v und relativ konstante Fahrtrichtung r. Bei 34 kann eine Ausgangsgröße entnommen werden, beispielsweise die Information "Autobahn" oder "Landstraße". Außerdem kann mit Hilfe der Datenbasis 33 und den zugeführten Eingangsgrößen eine Information über die Bereichsart gewonnen werden, beispielsweise ob sich das Kraftfahrzeug in einem städtischen Bereich befindet.

Fig. 7 stellt den Verlauf 41 einer Straße dar, auf der sich zwei Kraftfahrzeuge 42, 43 befinden. Um einen Auffahrunfall zu vermeiden, ist beispielsweise eine Notbremsung des Kraftfahrzeugs 43 dem Kraftfahrzeug 42 zu melden, während eine Notbremsung des Kraftfahrzeugs 42 keine Warnung des Fahrers des Kraftfahrzeugs 43 zur Folge haben soll. Um eine Unterscheidung von vor- oder rückwärtigen Kraftfahrzeugen zu ermöglichen, wird in jedem Kraftfahrzeug aus dessen Fahrkursinformation die gefahrene Fahrstrecke nachgebildet und in einer Tabelle abgelegt. Die Länge der nachgebildeten Fahrstrecke kann dabei variabel sein.

Die Tabelle kann auch in mehrere Teilbereiche aufgeteilt sein, in denen jeweils ein zusammenhängender Streckenabschnitt abgelegt ist. Ist ein Teilbereich vollständig mit der Streckeninformation gefüllt, wird ein weiterer Teilbereich verwendet und die aktuelle Streckeninformation dort weitergeführt. Eine weitere Möglichkeit zur Speicherung der abgebildeten Fahrstrecke ist durch eine zusammenhängende Ringtabelle gegeben, wobei die älteste Streckeninformation durch die neueste Streckeninformation überschrieben wird.

Die beiden Figuren 8a und 8b zeigen je eine dieser Tabellen für die Kraftfahrzeuge 42 und 43 an den in Fig. 7 dargestellten Orten. Beide Kraftfahrzeuge senden ihre jeweilige Tabelle, spätestens bei einer Warnmeldung aus. Bei einer solchen Aussendung der Tabelle durch das Kraftfahrzeug 43 stehen dem Prozessor im Kraftfahrzeug 42 beide Tabellen zur Verfügung. Der Prozessor bringt dann die beiden identischen Teile der Streckenabschnitte zur Deckung. Dies ist in Fig. 9 dargestellt. Ragt dabei ein Teil des Streckenabschnitts 45 über den gemeinsamen Teil 46 hinaus, ist das Kraftfahrzeug, das den Streckenabschnitt 45 zurückgelegt hat - nämlich das Kraftfahrzeug 43 (Fig. 7) - vorn.

## Patentansprüche

1. Einrichtung zur Warnung des Fahrers eines Kraftfahrzeugs, wobei eine Datenübertragungseinrichtung mit Datenübertragungseinrichtungen anderer Kraftfahrzeuge Daten austauscht, die für eine Kollisionsgefahr relevant sind, und eine Datenverarbeitungseinrichtung, die jeweils empfangene Daten auswertet und bei Feststellen eine Kollisionsgefahr Warnsignale ausgibt, wobei die Daten mindestens Informationen über die Geschwindigkeit und die Fahrtrichtung des jeweiligen Kraftfahrzeugs (13, 15) enthalten, **dadurch gekennzeichnet, dass** die empfangene Fahrtrichtung mit der Fahrtrichtung des eigenen Kraftfahrzeugs (11) verglichen wird und dass bei entgegengesetzten Fahrtrichtungen einschließlich eines Toleranzbandes das Kraftfahrzeug (15), welches die empfangene Fahrtrichtung ausgesendet hat, dem Gegenverkehr zugeordnet und keine Warnung ausgegeben wird.

2. Einrichtung nach Anspruch 1, **dadurch gekennzeichnet, dass** die Daten Augenblickswerte der Fahrzeuggeschwindigkeit und der Fahrtrichtung zum jeweiligen Zeitpunkt enthalten.

3. Einrichtung nach Anspruch 2, **dadurch gekennzeichnet, dass** die Daten ferner vorangegangene Augenblickswerte enthalten.

4. Einrichtung nach einem der Ansprüche 2 oder 3, **dadurch gekennzeichnet, dass** die Daten ferner Mittelwerte der Fahrzeuggeschwindigkeit und/oder der Fahrtrichtung enthalten.

5. Einrichtung nach Anspruch 4, **dadurch gekennzeichnet, dass** die Mittelwerte über vorgegebene Zeitintervalle gebildet werden.

6. Einrichtung nach Anspruch 4, **dadurch gekennzeichnet, dass** die Mittelwerte über vorgegebene Streckenintervalle gebildet werden.

7. Einrichtung nach einem der vorhergehenden Ansprüche, **dadurch gekennzeichnet, dass** die Daten nach vorgegebenen Zeitintervallen gesendet werden.

8. Einrichtung nach einem der Ansprüche 1 bis 6, **dadurch gekennzeichnet, dass** die Daten nach vorgegebenen Streckenintervallen gesendet werden.

9. Einrichtung nach einem der vorhergehenden Ansprüche, **dadurch gekennzeichnet, dass** in der Datenverarbeitungseinrichtung (1) eine Datenbasis (33) vorhanden ist, welche für Straßen- oder Bereichsarten typische Profile von Eingangsgrößen beschreibt, welcher als Eingangsgrößen mindestens die Fahrtrichtung und die Geschwindigkeit zuführbar sind und welcher als Ausgangsgröße eine Straßen- oder Bereichsart entnehmbar ist.

10. Einrichtung nach Anspruch 9, **dadurch gekennzeichnet, dass** die Ausgangsgröße Straßenart an andere Kraftfahrzeuge gesendet und in dem jeweils empfangenen Kraftfahrzeug mit der dort ermittelten Straßenart verglichen wird.

11. Einrichtung nach einem der Ansprüche 9 oder 10, **dadurch gekennzeichnet, dass** ferner die Eingangsgrößen an andere Kraftfahrzeuge übertragen und dort zusätzlich der Datenbasis zugeführt werden.

12. Einrichtung nach einem der vorhergehenden Ansprüche, **dadurch gekennzeichnet, dass** Fahrtrichtungsinformationen einer jeweils zurückgelegten Fahrtstrecke (44, 45) in einer Tabelle abgelegt werden, dass die Tabelle von Zeit zu Zeit an andere Kraftfahrzeuge übertragen wird und dass die empfangene Tabelle und die in der eigenen Datenverarbeitungseinrichtung vorliegende Tabelle derart kombiniert werden, dass in der Tabelle als gleich beschriebene Streckenabschnitte (46) übereinandergelegt werden und dass dasjenige Kraftfahrzeug (43), aus dem die Tabelle empfangen wurde, als vorausfahrend betrachtet wird, wenn die empfange Tabelle in Richtung neueren Fahrtrichtungsinformationen über die Tabelle in der eigenen Datenverarbeitungseinrichtung hinausragt.

13. Einrichtung nach einem der vorhergehenden Ansprüche, **dadurch gekennzeichnet, dass** die Informationen zusammen mit einer Warnmeldung gesendet werden.

14. Einrichtung nach einem der Ansprüche 1 bis 11, **dadurch gekennzeichnet, dass** die Informationen wiederholt gesendet werden.

## Claims

1. Device for warning the driver of a motor vehicle, a data transmission device exchanging, with data transmission devices of other motor vehicles, data which is relevant to a risk of collision, and a data processing device which evaluates respectively received data and outputs warning signals when a risk of collision is determined, the data containing at least information about the speed and the direction of travel of the respective motor vehicle (13, 15), **characterized in that** the received direction of travel is compared with the direction of travel of the driver's own motor vehicle (11), and **in that** when there are opposite directions of travel including a tolerance margin, the motor vehicle (15) which has emitted the received direction of travel is assigned to the oncoming traffic and a warning is not issued.

2. Device according to Claim 1, **characterized in that** the data contains instantaneous values of the speed of the vehicle and the direction of travel at the respective time.

3. Device according to Claim 2, **characterized in that** the data also contains preceding instantaneous values.

4. Device according to one of Claims 2 or 3, **characterized in that** the data also contains average values of the speed of the vehicle and/or the direction of travel.

5. Device according to Claim 4, **characterized in that** the mean values are formed over predefined time intervals.

6. Device according to Claim 4, **characterized in that** the mean values are formed over predefined distance intervals.

7. Device according to one of the preceding claims, **characterized in that** the data is transmitted after predefined time intervals.

8. Device according to one of Claims 1 to 6, **characterized in that** the data is transmitted after predefined distance intervals.

9. Device according to one of the preceding claims, **characterized in that** in the data processing device (1) there is a database (33) which describes profiles of input variables which are typical of types of road or region and to which at least the direction of travel and the speed can be fed as input variables and from which a type of road or region can be extracted as an output variable.

10. Device according to Claim 9, **characterized in that** the type-of-road output variable is transmitted to other motor vehicles and compared in the respectively receiving motor vehicle with the type of road determined there.

11. Device according to one of Claims 9 or 10, **characterized in that** in addition the input variables are transmitted to other motor vehicles and additionally fed to the database there.

12. Device according to one of the preceding claims, **characterized in that** direction-of-travel information relating to a route (44, 45) which has been respectively travelled along is stored in a table, **in that** the table is transmitted from time to time to other vehicles, and **in that** the received table and the table which is present in the driver's own data processing device are combined in such a way that route sections (46) which are described as identical are superimposed one on the other in the table, and **in that** that motor vehicle (43) from which the table was received is considered as predictive if the received table projects, in the direction of relatively new direction-of-travel information, beyond the table in the driver's own data processing device.

13. Device according to one of the preceding claims, **characterized in that** the information is transmitted together with a warning message.

14. Device according to one of Claims 1 to 11, **characterized in that** the information is transmitted repeatedly.

## Revendications

1. Dispositif d'avertissement du conducteur d'un véhicule automobile, dans lequel un dispositif de transmission de données échange avec des dispositifs de transmission de données d'autres véhicules automobiles, des données qui intéressent un risque de collision, et un dispositif de traitement de données exploite les données reçues et délivre un signal d'avertissement quand un risque de collision est établi, les données comportant au moins des informations sur la vitesse et le sens de circulation des véhicules respectifs (13, 15),
**caractérisé en ce que**
le sens de circulation reçu est comparé au sens de circulation du véhicule automobile lui-même (11) et quand ces sens sont opposés, une bande de tolérances étant comprise, le véhicule (15) qui a émis le sens de circulation est associé au trafic en sens inverse et aucun avertissement n'est délivré.

2. Dispositif d'avertissement selon la revendication 1,
**caractérisé en ce que**
les données contiennent à tout moment des valeurs instantanées de la vitesse et du sens de circulation du véhicule.

3. Dispositif d'avertissement selon la revendication 2,
**caractérisé en ce que**
les données contiennent de plus des valeurs instantanées précédentes.

4. Dispositif d'avertissement selon la revendication 2 ou 3,
**caractérisé en ce que**
les données contiennent de plus les valeurs moyennes de la vitesse et/ou du sens de circulation du véhicule.

5. Dispositif d'avertissement selon la revendication 4,
**caractérisé en ce que**
les valeurs moyennes sont établies sur des intervalles de temps prédéfinis.

6. Dispositif d'avertissement selon la revendication 4,
**caractérisé en ce que**
les valeurs moyennes sont établies sur des intervalles de parcours prédéfinis.

7. Dispositif d'avertissement selon une des revendications précédentes,
**caractérisé en ce que**
les données sont émises après des intervalles de temps prédéfinis.

8. Dispositif d'avertissement selon une des revendications 1 à 6,
**caractérisé en ce que**
les données sont émises après des intervalles de parcours prédéfinis.

9. Dispositif d'avertissement selon une des revendications précédentes,
**caractérisé en ce que**
le dispositif de traitement de données (1) contient une base de données (33) qui décrit, pour des types de route ou de zone, des profils typiques de grandeurs d'entrée, et qui peut recevoir comme grandeurs d'entrée au moins le sens de la circulation et la vitesse et délivrer comme grandeur de sortie un type de route ou de zone.

10. Dispositif d'avertissement selon la revendication 9,
**caractérisé en ce que**
la grandeur de sortie qui est le type de route est envoyée à d'autres véhicules et, dans chacun de ceux-ci, elle est comparée avec le type de route déterminé dans ce véhicule.

11. Dispositif d'avertissement selon la revendication 9 ou 10,
**caractérisé en ce que**
de plus les grandeurs d'entrée sont transmises à d'autres véhicules et introduites dans les bases de données de ceux-ci.

12. Dispositif d'avertissement selon une des revendications précédentes,
**caractérisé en ce que**
- les informations concernant le sens de déplacement du véhicule pour chaque parcours effectué (44, 45) sont déposées dans un tableau qui est transmis de temps en temps à d'autres véhicules,
- le tableau reçu et le tableau existant dans le dispositif de traitement de données du véhicule lui-même sont combinés de manière que dans le tableau sont disposées en superposition les fractions de parcours décrites de la même manière,
- chaque véhicule (43) dont le tableau a été reçu est considéré comme un véhicule circulant devant, si le tableau reçu donne des informations de sens de circulation qui sont plus nouvelles que celles du tableau contenu dans le dispositif de traitement de données du véhicule lui-même.

13. Dispositif d'avertissement selon une des revendications précédentes,
**caractérisé en ce que**
les informations sont émises en même temps qu'une information d'avertissement.

14. Dispositif d'avertissement selon une des revendications 1 à 11,
**caractérisé en ce que**
les informations sont émises de manière répétitive.
